# FASCICULE DE BREVET EUROPEEN

(11) **EP 0 838 582 B1**
(45) Date de publication et mention de la délivrance du brevet: **05.03.2003**
(21) Numéro de dépôt: 97402434.1
(22) Date de dépôt: 15.10.1997
(51) Int. Cl.: F02D 41/14

(54) **Procédé de contrôle de l'admission d'un moteur quatre temps à injection directe**
Verfahren zur Steuerung des Einlasses einer Viertaktbrennkraftmaschine mit Direkteinspritzung
Method for controlling the intake of a four stroke direct injection engine

(30) Priorité: 28.10.1996 FR 9613216
(43) Date de publication de la demande: 29.04.1998
(73) Titulaire: INSTITUT FRANCAIS DU PETROLE, 92852 Rueil-Malmaison Cedex (FR)
(72) Inventeur: Monnier, Gaétan, 92852 Rueil-Malmaison (FR)

(56) Documents cités:
- DE-A- 4 310 145
- FR-A- 2 715 971
- US-A- 3 955 363
- US-A- 4 106 448
- US-A- 4 391 240
- US-A- 5 056 308
- US-A- 5 247 793
- PATENT ABSTRACTS OF JAPAN vol. 096, no. 005, 31 mai 1996 & JP 08 004522 A (HITACHI LTD;OTHERS: 01), 9 janvier 1996,

## Description

La présente invention concerne le domaine des moteurs à combustion interne à 4 temps et à injection directe d'essence.

Plus particulièrement la présente invention vise le contrôle de l'admission en vue de réduire à la fois la consommation et les émissions de polluants de tels moteurs.

Ces deux objectifs paraissent à priori peu compatibles puisque une forte réduction de la consommation nécessite une combustion à charge diluée qui n'est généralement pas compatible avec un post-traitement des effluents gazeux.

Plus précisément, une forte réduction de la consommation des moteurs à allumage commandé nécessite l'utilisation d'une combustion à charge diluée (air et/ou EGR) pour diminuer les pertes par pompage de la charge introduite et augmenter le coefficient polytropique des gaz et par conséquent le rendement du cycle moteur à quatre temps.

Cependant les moteurs à combustion en mélange très dilué ne peuvent pas bénéficier d'un post-traitement des effluents gazeux par catalyse tri-fonctionnelle pour satisfaire les réglementations en vigueur sur les niveaux d'émissions de polluants des véhicules, car la richesse à l'échappement est inférieure à 1.

Des concepts de première génération ont déjà été introduits sur le marché par les constructeurs automobiles, ce sont les moteurs à mélange pauvre (Honda VTE, Toyota Carina...). Ceux-ci permettent des gains en consommation en utilisation urbaine de l'ordre de 10% par rapport aux moteurs traditionnels. Cependant pour respecter les contraintes d'émissions de polluants, ces moteurs à mélange pauvre ont généralement recours à un fonctionnement stoechiométrique traditionnel pendant les phases de démarrage à froid ou lors des accélérations. Cette stratégie permet de contrôler les émissions du véhicule en ayant recours au système conventionnel de dépollution par catalyse tri-fonctionnnelle, mais elle supprime tout gain en consommation sur véhicule lors de ces phases de fonctionnement.

Les solutions de deuxième génération qui ont suivi dans le temps celles de la première génération sont liées au développement de l'injection directe d'essence. Couplés à une maîtrise de la combustion stratifiée, les systèmes de deuxième génération permettent d'envisager des gains en consommation urbaine de l'ordre de 20% grâce à la suppression des pertes par pompage du cycle moteur à quatre temps.

Tout comme les premiers concepts, ces moteurs ne peuvent avoir recours à la catalyse tri-fonctionnelle sous peine d'annulation des gains en consommation attendus.

Enoncés de façon générale, les deux principaux problèmes liés à la dépollution des moteurs à injection directe d'essence fonctionnant en combustion stratifiée sont les suivants :

Les émissions d'oxydes d'azote ne peuvent pas être facilement post-traitées par catalyse de NOₓ et doivent donc être suffisamment faibles à la source.

La température des gaz d'échappement est trop basse pour un amorçage rapide du catalyseur d'oxydation pour la conversion du monoxyde de carbone et des hydrocarbures imbrûlés.

Vis-à-vis du deuxième problème, des systèmes de chauffage notamment électrique du catalyseur d'oxydation ont déjà été envisagés. Cependant, ces systèmes sont coûteux en énergie ce qui pose problème notamment au démarrage du véhicule.

Dans la demande de brevet français EN. 95/07384 déposée au nom de la demanderesse, il est décrit une façon de contrôler le débit d'air à l'admission d'un moteur à quatre temps à injection directe. Ce document montre une solution simple permettant un basculement fiable d'un mode de fonctionnement à un autre, ce qui réalise une gestion optimisée de la combustion.

Il est également connu par le document Patent Abstracts of Japan vol.096, no.005, 31 mai 1996 & JP 08004522 un procédé de contrôle de l'admission d'un moteur 4 temps à injection directe d'essence dans au moins deux chambres de combustion consistant à faire fonctionner différemment, par une admission, au moins deux cylindres ou groupes de cylindres afin de réduire les émissions de polluants à l'échappement, le premier cylindre ou groupe de cylindres fonctionnant à une richesse supérieure ou égale à l'unité, et le deuxième cylindre ou groupe de cylindres fonctionnant en sous-stoechiométrie.

Ce procédé présente néanmoins l'inconvénient, d'une part, d'être un compromis entre la réduction de consommation et la réduction des émissions de polluants et, d'autre part, de ne pas pouvoir dépasser un certain seuil de dépollution des gaz d'échappement.

La présente invention vise à améliorer notamment les problèmes énoncés ci-dessus tout en maintenant un gain en consommation des moteurs à injection directe d'essence et tout en satisfaisant aux contraintes d'émissions de polluants grâce à un contrôle moteur spécifique cylindre à cylindre.

A cet effet, un procédé de contrôle de l'admission d'un moteur 4 temps à injection directe d'essence dans au moins deux chambres de combustion consistant à faire fonctionner différemment, par une admission différente en air et en carburant, au moins deux cylindres ou groupes de cylindres, le premier cylindre ou groupe de cylindres fonctionnant à une richesse supérieure ou égale à l'unité, un catalyseur d'oxydo réduction étant associé au premier groupe de cylindre, et le deuxième cylindre ou groupe de cylindres fonctionnant en mélange pauvre, afin de diminuer la consommation tout en réduisant les émissions de polluants à l'échappement, est caractérisé en ce que l'on recycle une partie au moins des gaz d'échappement du premier cylindre ou groupe de cylindres vers l'admission générale du moteur

En outre, l'on associe un catalyseur principal à l'échappement du deuxième cylindre ou groupe de cylindres.

Selon un arrangement particulier de l'invention, l'on dispose le catalyseur principal en aval du catalyseur d'oxydo réduction et en sortie de l'échappement du deuxième cylindre ou groupe de cylindres.

De façon intéressante, l'on recycle une partie au moins des gaz d'échappement du premier cylindre ou groupe de cylindres, vers l'admission générale du moteur.

Plus particulièrement, les gaz d'échappement recyclés sont pris en amont du moyen de traitement des gaz associé au premier cylindre ou groupe de cylindres.

D'autres caractéristiques, détails, avantages de la présente invention apparaîtront mieux à la lecture de la description qui va suivre, faite à titre illustratif et nullement limitatif en référence aux figures annexées sur lesquelles:
- la figure 1 est un schéma simplifié d'un mode de mise en oeuvre de l'invention; et
- la figure 2 est un schéma simplifié d'un autre mode de mise en oeuvre de l'invention.

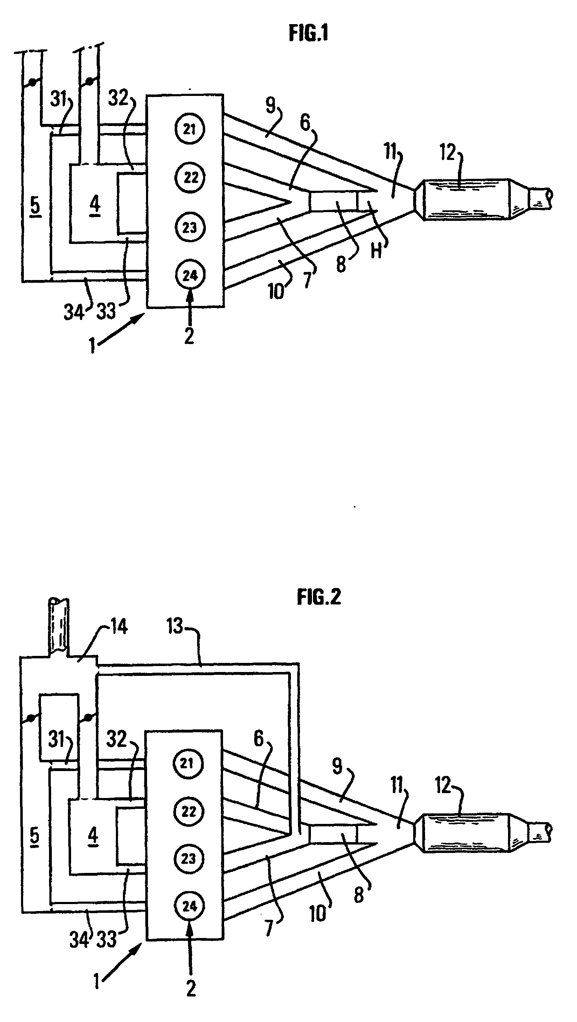

La figure 1 montre, de façon schématique, un moteur 1 comportant quatre cylindres 21, 22, 23, 24 ayant chacun une admission d'air 31, 32, 33, 34.

Selon l'invention, on scinde les admissions en au moins deux groupes indépendants ayant chacun leur propre système 4, 5 de contrôle du débit d'air.

Pour un moteur tel que représenté sur la figure 1 c'est-à-dire ayant quatre cylindres, on peut par exemple regrouper les admissions de deux cylindres 22 et 23 dans un premier plénum 4 et les admissions des deux autres cylindres 21, 24 dans un deuxième plénum 5.

Ainsi, lors de fonctionnements en charges partielles, l'invention consiste à faire fonctionner le premier groupe de cylindres 22, 23 à une richesse proche de la stoechiométrie voire à une richesse supérieure à l'unité; pour le deuxième groupe de cylindres 21, 24, une admission stratifiée avec une pleine arrivée d'air est simultanément prévue.

Ainsi un gain important en consommation peut être obtenu du fait de la combustion stratifiée dans le deuxième groupe de cylindres.

Par ailleurs, l'échappement des différents cylindres peut être organisé de la façon suivante :

Le premier groupe de cylindres 22, 23 présente soit un échappement commun, soit chacun une ligne 6, 7, les lignes se rejoignant finalement juste en amont d'un premier moyen de traitement des gaz 8 tel qu'un catalyseur trois voies connu en soi.

L'échappement du deuxième groupe de cylindres 21, 24 peut être constitué de deux lignes 9, 10 chacune partant d'un cylindre et qui se rejoignent finalement en une zone 11.

Préférentiellement, la zone 11 est située en aval du premier moyen de traitement des gaz 8 et en amont d'un deuxième moyen de traitement des gaz 12, appelé dans la suite de ce texte catalyseur principal.

Avec une telle disposition de l'échappement, il est possible d'obtenir une dépollution conventionnelle des gaz émis par le premier groupe de cylindres 22, 23, grâce au premier catalyseur 8.

A Cet avantage s'ajoute un gain en consommation obtenu grâce au deuxième groupe de cylindres qui fonctionne en mode stratifié, avec un mélange très pauvre.

Un tel contrôle cylindre à cylindre et surtout cycle à cycle de l'injection est rendu possible grâce à l'injection directe d'essence dans les cylindres qui élimine notamment tous les problèmes de contrôle de la richesse liés au mouillage des parois.

En outre, selon l'invention, la charge moteur totale peut être répartie non uniformément entre les groupes de cylindres.

Il est ainsi possible de minimiser la charge sur les cylindres fonctionnant en mode stratifié qui possèdent déjà un bon rendement, et d'augmenter la charge sur les cylindres 22, 23 fonctionnant à la stoechiométrie, pour améliorer le rendement en diminuant la boucle basse pression du diagramme (Pression, Volume) moteur.

Par ailleurs, pour amorcer rapidement le catalyseur 8 lors du démarrage du véhicule, il est possible de faire fonctionner le premier groupe de cylindres 22, 23 à une richesse fortement supérieure à 1. Ceci permet de minimiser les émissions d'oxydes d'azote du moteur mais surtout de générer des émissions d'hydrogène qui permettront d'amorcer rapidement le catalyseur principal 12 disposé en aval du catalyseur 8.

Autrement dit, on cherche selon l'invention à obtenir une richesse moyenne plutôt pauvre sur le catalyseur principal en combinant un fonctionnement du premier groupe de cylindres 22, 23 à une richesse fortement supérieure à 1 pour générer de l'hydrogène, avec un fonctionnement du second groupe de cylindres 21, 24 en mélange très pauvre (combustion stratifiée) pour apporter l'oxygène nécessaire à l'amorçage du catalyseur principal 12. Conformément à ce fonctionnement, la zone 11 renferme donc un mélange plutôt pauvre. Une richesse inférieure à environ 0,7 sera couramment celle du fonctionnement du second groupe de cylindre 21, 24.

Pour être plus précis, le catalyseur principal 12 traite essentiellement les gaz issus du deuxième groupe de cylindre.

La figure 2 illustre un mode de réalisation de l'invention qui comprend les mêmes éléments que ceux qui viennent d'être décrits en relation avec la figure 1. De plus, une ligne 13 est prévue selon ce mode de réalisation. La ligne 13 débouche d'une part sur la sortie commune des échappement 6, 7 du premier groupe de cylindres, et d'autre part au niveau de l'admission 14 commune à tous les cylindres. Il s'agit donc d'une conduite de gaz recyclés qui permet de prélever des gaz d'échappement émis par les cylindres 22, 23 ayant la richesse de fonctionnement la plus élevée, et de ramener ces gaz vers l'admission.

Le choix du point de piquage des gaz recyclés permet avantageusement de minimiser le débit des gaz vers l'admission puisque au point choisi les gaz d'échappement sont les plus riches en dioxyde de carbone (CO₂).

Un piquage dans la zone 11 par exemple serait beaucoup moins intéressant de ce point de vue.

Bien entendu la présente invention ne s'applique pas uniquement aux moteurs ayant des cylindres tels que décrits ci-avant. En particulier les moteurs six cylindres avec deux groupes de trois cylindres chacun peuvent être mise en oeuvre selon l'invention. De même les groupes de cylindres peuvent ne pas comporter le même nombre de cylindres chacun.

## Revendications

1. Procédé de contrôle de l'admission d'un moteur 4 temps à injection directe d'essence dans au moins deux chambres de combustion consistant à faire fonctionner différemment, par une admission différente en air et en carburant, au moins deux cylindres ou groupes de cylindres, le premier cylindre ou groupe de cylindres (22, 23) fonctionnant à une richesse supérieure ou égale à l'unité, un catalyseur (8) d'oxydo réduction étant associé au premier groupe de cylindre, et le deuxième cylindre ou groupe de cylindres (21, 24) fonctionnant en mélange pauvre, afin de diminuer la consommation tout en réduisant les émissions de polluants à l'échappement, **caractérisé en ce que** l'on recycle une partie au moins des gaz d'échappement du premier cylindre ou groupe de cylindres vers l'admission générale (14) du moteur.

2. Procédé selon la revendication 1, **caractérisé en ce que** l'on associe un catalyseur principal (12) à l'échappement du deuxième cylindre ou groupe de cylindres (21, 24).

3. Procédé selon la revendication 2, **caractérisé en ce que** l'on dispose le catalyseur principal (12) en aval du catalyseur (8) d'oxydo réduction et en aval d'une zone (11) où se rejoignent les échappements du premier et du deuxième cylindre ou groupe de cylindres (21, 24).

4. Procédé selon la revendication 1, **caractérisé en ce que** les gaz d'échappement recyclés sont pris en amont du moyen (8) de traitement des gaz associé au premier cylindre ou groupe de cylindres (22, 23).

5. Procédé selon l'une quelconque des revendications précédentes, **caractérisé en ce que** le deuxième groupe de cylindres fonctionne à une richesse inférieure ou égale à 0,7.

## Patentansprüche

1. Verfahren zur Regelung des Einlasses eines Viertaktmotors mit Direktbenzineinspritzung in wenigstens zwei Brennkammern, das darin besteht, durch einen unterschiedlichen Einlass von Luft und Treibstoff wenigstens zwei Zylinder oder Gruppen von Zylindern unterschiedlich arbeiten zu lassen, wobei der ersten Zylinder oder Zylindergruppe (22, 23) bei einer Fettheit größer oder gleich zur Einheit arbeitet, wobei ein Oxidations-Reduktions-Katalysator (8) einer ersten Zylindergruppe zugeordnet ist und wobei der zweite Zylinder oder Zylindergruppe (21, 24) bei Magergemisch arbeitet, um den Verbrauch unter Verminderung der Auspuffschadstoffemissionen zu verhindern, **dadurch gekennzeichnet, dass** man einen Teil wenigstens der Auspuffgase des ersten Zylinders oder Zylindergruppe zum allgemeinen Einlass (14) des Motors rezykliert.

2. Verfahren nach Anspruch 1, **dadurch gekennzeichnet, dass** man einen Hauptkatalysator (12) dem Auspuff des zweiten Zylinders oder Zylindergruppe (21, 24) zuordnet.

3. Verfahren nach Anspruch 2, **dadurch gekennzeichnet, dass** man den Hauptkatalysator (12) hinter dem Oxidations-Reduktions-Katalysator (8) und hinter einer Zone (11) anordnet, wo sich die Auspuffe des ersten und des zweiten Zylinders oder Zylindergruppe (21, 24) wieder vereinen.

4. Verfahren nach Anspruch 1, **dadurch gekennzeichnet, dass** die rezyklierten Auspuffgase vor einem Mittel (8) zur Behandlung der Gase aufgenommen werden, das mit dem ersten Zylinder oder Zylindergruppe (22, 23) verbunden ist.

5. Verfahren nach einem der vorhergehenden Ansprüche, **dadurch gekennzeichnet, dass** die zweite Zylindergruppe bei einer Fettheit unter oder gleich 0,7 arbeitet.

## Claims

1. Method for control of the induction of a 4-stroke engine with direct injection of petrol into at least two combustion chambers consisting of causing at least two cylinders or groups of cylinders to operate differently by different induction of air and of fuel, the first cylinder or group of cylinders (22, 23) operating with a richness greater than or equal to unity, an oxide reduction catalyst (8) being associated with the first cylinder group, and the second cylinder or group of cylinders (21, 24) operating with a poor mixture, in order to decrease consumption while reducing emissions of pollutants at the exhaust, ***characterised by** the fact that* at least a part of the exhaust gases from the first cylinder or group of cylinders is recycled to the general induction (14) of the engine.

2. Method as described in claim 1, ***characterised by** the fact that* a main catalyst (12) is associated with the exhaust from the second cylinder or group of cylinders (21, 24).

3. Method as described in claim 2, ***characterised by** the fact that* the main catalyst (12) is arranged downstream of the oxide reduction catalyst (8) and downstream of a zone (11) in which the exhausts from the first and from the second cylinder or group of cylinders (21, 24) join.

4. Method as described in claim 1, ***characterised by** the fact that* the recycled exhaust gases are taken off upstream of the gas treatment means (8) associated with the first cylinder or group of cylinders (22, 23).

5. Method as described in any one of the preceding claims, ***characterised by** the fact that* the second group of cylinders operates at a richness less than or equal to 0.7.
